# EUROPEAN PATENT APPLICATION

(11) **EP 3 296 802 A1**
(43) Date of publication of application: **21.03.2018**
(21) Application number: 16792135.2
(22) Date of filing: 06.05.2016
(51) Int. Cl.: G02C 11/00, H04L 29/08

(54) **SMART GLASSES**

(30) Priority: 13.05.2015 CN 201510243557
(71) Applicant: Zhejiang Geely Holding Group Co., Ltd., Zhejiang 310051 (CN); Zhejiang Geely Automobile Research Institute Co., Ltd., Taizhou, Zhejiang 317000 (CN)
(72) Inventor: LI, Shufu, Hangzhou Zhejiang 310051 (CN)
(74) Representative: Ziebig, Marlene
(86) International application number: PCT/CN2016/081306
(87) International publication number: WO 2016/180285

(57) **Abstract**

The present invention relates to a wearable apparatus, and particularly to a pair of smart glasses. The smart glasses comprise a glasses body composed of a glasses frame and lenses, and also comprise an image acquisition device which is arranged on the glasses body and used for acquiring an environment image; a detection device which is in communication connection with the image acquisition device, wherein the detection device acquires the environment image, and detects and extracts a human face image or/and a foreign language image; a recognition device which is in communication connection with the detection device and used for recognizing the human face image or/and the foreign language image, so as to acquire identity information and native language information; and an information output device which plays the identity information, the native language information, the identity information or/and the native language information and at least one of the following to a user: the human face image; the foreign language image; and the environment image. By means of the present invention, acquaintances and strangers can be recognized, and foreign languages can be translated.

## Description

### Technical Field

The present invention relates to a wearable device, and in particular to a (or a pair of) smart glasses.

### Background of the Invention

Usually, people will meet a person they know before, but cannot remember his/her name, and this will have a negative impact on social or business activities. On the contrary, if people are able to learn the name of the person in time, people will become more comfortable and confident in the social or business activities.

In addition, when a person meets a stranger, while his/her friend may know that stranger, how to obtain information about the stranger via a friend is also a problem to be solved urgently.

Moreover, in social activities or business and personal trips, people will encounter languages of many different countries, such as a menu, price list, contract, etc. in English, German, Japanese, Korean, etc., and may possibly encounter language information, etc. about an airport, railway station, subway, etc. broadcast in foreign languages. This will cause inconvenience to some people who cannot master multiple languages.

### Summary of the Invention

One objective of the present invention is to provide a smart glasses which facilitates people to obtain the name of a person they know before.

A further objective of the present invention is to enable people to have the change to obtain information about a stranger.

Another further objective of the present invention is to provide a smart glasses with a translation function.

Particularly, a smart glasses is provided in the present invention, comprising a glasses body constituted by a glasses frame and lenses, and further comprises:
an image acquisition device, provided on the glasses body, for acquiring an environmental image;
a detection device, in communicative connection with the image acquisition device, the detection device acquiring the environmental image, and detecting and extracting a human face image or/and foreign language image in the environmental image;
a recognition device, in communicative connection with the detection device, for recognizing the human face image or/and foreign language image to acquire identity information corresponding to the human face image and mother tongue information corresponding to the foreign language image; and
an information output device, provided on the glasses body and in communicative connection with the detection device, the information output device playing the identity information, the mother tongue information, the identity information or/and mother tongue information, and at least one of the following images to a specified user: the human face image, the foreign language image, and the environmental image.

Furthermore, the identity information and the mother tongue information is played to the user by at least one of the following manners: voice; image; video; and text.

Furthermore, the smart glasses further comprise:
a first communication module, provided on the glasses body and in communicative connection with the image acquisition device, the first communication module being in communicative connection with a processor provided separated from the glasses body and sending the environmental image acquired by the image acquisition device to the processor, and the detection device and the recognition device being comprised within the processor.

Furthermore, the processor belongs to a mobile phone.

Furthermore, the detection device and the recognition device are provided on the glasses body.

Furthermore, the recognition device is configured to, when the human face image is greater than or equal to a pre-set similarity compared to a first comparison image, then extract identity information comprised in the first comparison image, and use the identity information as the identity information corresponding to the human face image; and when the foreign language image is greater than or equal to a pre-set similarity compared to a second comparison image, then extract mother tongue information comprised in the second comparison image, and use the mother tongue information as the mother tongue information corresponding to the foreign language image.

Furthermore, the smart glasses further comprise:
a retrieval database, located locally or at a cloud end, the retrieval database storing the first comparison image for comparing with the human face image and the second comparison image for comparing with the foreign language image.

Furthermore, the retrieval database receives at least one of the following human face images as the first comparison image:
the human face image which is fully shared;
the human face image which is shared within a particular range and within an acquisition permission;
the human face image which is received passively; and
the human face image which is actively photographed.

Furthermore, the smart glasses further comprise:
a shared cloud, the shared cloud being configured to: only a particular user having a permission to obtain or share the human face image, enable the user having the permission to acquire the human face image shared within the particular range and within the acquisition permission.

Furthermore, the image acquisition device further comprises a second communication module in communication with the shared cloud, and the second communication module uses at least one of the following communication protocols: Bluetooth, WIFI, and 3G protocol or 4G protocol.

Furthermore, a user of the image acquisition device actively photographs the human face image and manually adds the corresponding identity information on the human face image to generate one piece of entry information in a mobile phone contact book of the user, and uses the entry information as the first comparison image.

Furthermore, the smart glasses further comprise:
an information input device, provided separated from the glasses body and in communicative connection with the detection device, the information input device being able to acquire the human face image, and storing same after the corresponding identity information is added to the retrieval database.

Furthermore, the smart glasses further comprise:
a Bluetooth earphone, provided separated from the glasses body and in communicative connection with the information output device, the Bluetooth earphone playing the identity information to the user.

Furthermore, the information output device comprises:
a first guidance module, in communicative connection with the image acquisition device or the detection device, for acquiring the environmental image, and marking the corresponding human face image with the identity information on the environmental image, so that the information output device displays the identity information with the environmental image attached to the user.

Furthermore, the information output device comprises:
a second guidance module, in communicative connection with the image acquisition device, for acquiring the environmental image obtained the last time, and marking the corresponding human face image with the identity information on the environmental image, so that the information output device displays the identity information with the environmental image attached to the user.

Furthermore, an arrow is used to mark the corresponding human face image with the identity information on the environmental image.

Furthermore, the information output device comprises:
a third guidance module, in communicative connection with the recognition device and the detection device respectively, for acquiring relative position information among the recognized human face images, and arranging the acquired identity information corresponding to the human face images according to the relative position information, so that the information output device displays the arranged identity information to the user.

Furthermore, the information output device comprises:
a fourth guidance module, having a motion sensor, the motion sensor being in communicative connection with the recognition device and the image acquisition device respectively, the motion sensor acquiring displacement information about the environmental image to which the human face image belongs and the environmental image obtained the last time, and playing the identity information with the displacement information attached to the user.

Furthermore, the information output device comprises:
a fifth guidance module, in communicative connection with the recognition device and the image acquisition device respectively, the fifth guidance module acquiring the environmental image to which the human face image belongs, and highlighting the human face image relative to other portions of the environmental image or fading the other portions of the environmental image relative to the human face image, and displaying the processed environmental image to the user.

Furthermore, the environmental image is a portion of region outside the field of view of the user.

Furthermore, the image acquisition device comprises a camera.

Furthermore, the user is a user of a smart glasses to which the image acquisition device belongs or a user of other smart glasses.

Furthermore, the image acquisition device is controlled by the user to actively photograph the surrounding environment so as to acquire an environmental image.

Furthermore, the image acquisition device is controlled by the user to passively receive a transmitted environmental image.

According to the present invention, in the case of meeting a person known before but his/her name cannot be remembered, the image acquisition device of the present invention is controlled by a user to actively photograph the surrounding environment so as to acquire an environmental image containing a head portrait of the person, identity information comprising the name about the person is recognized by the detection device and recognition device, and the identity information is sent to the user, which increases the convenience of social or business activities.

Furthermore, according to the present invention, in the case of meeting a stranger, the image acquisition device of the present invention is controlled by a prior user to actively photograph the surrounding environment so as to acquire an environmental image containing a head portrait of the person, and the environmental image is sent to a posterior user. The posterior user passively receives the transmitted environmental image, recognizes, i.e. knows the stranger by the detection device and recognition device, and then feeds identity information comprising the name about the person to the prior user, which increases the convenience of social activities.

Furthermore, according to the present invention, if the environmental image acquired by the image acquisition device contains a foreign language image, then the detection device detects the foreign language image and sends same to the recognition device for recognition, and plays mother tongue information corresponding to the foreign language image after recognition to the user. As to how to recognize text and translate same in an image, the prior art has provided many discussions, and this will not be introduced in detail herein.

According to the detailed description for the specific embodiments of the present invention in conjunction with the drawings below, the above and other objectives, advantages and characteristics of the present invention will be more apparent to those skilled in the art.

### Brief Description of the Drawings

Some specific embodiments of the present invention will be described below in detail in an exemplary rather than limiting manner with reference to the accompanying drawings. In the drawings, the same drawing reference represents the same or similar components or parts. In the accompanying drawings:
Fig. 1 is a schematic top view of a smart glasses according to one embodiment of the present invention;
Fig. 2 is a schematic flow chart of a smart glasses recognizing a human face according to one embodiment of the present invention;
Fig. 3 is a system flow chart of a smart glasses of one embodiment of the present invention;
Fig. 4 is a flow chart of a smart glasses generating a first comparison image for human face recognition of one embodiment of the present invention;
Fig. 5 is a flow chart of a smart glasses for human face recognition and text recognition of one embodiment of the present invention; and
Fig. 6 is a schematic diagram of a smart glasses according to another embodiment of the present invention.

### Detailed Description of the Invention

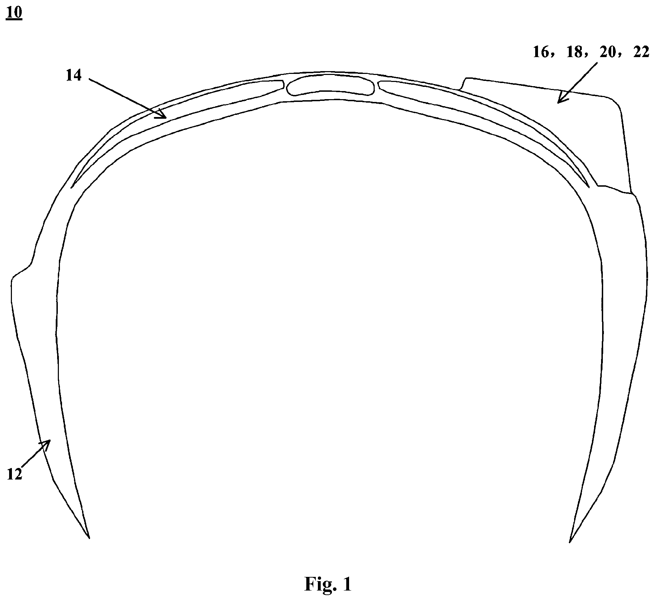

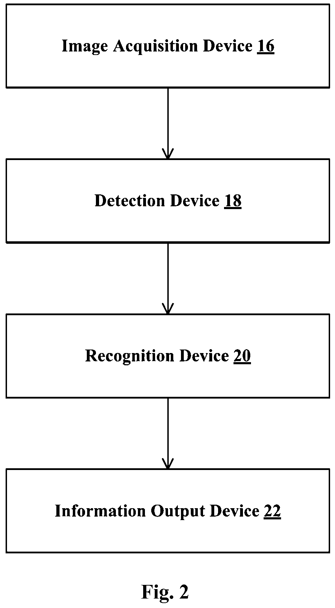

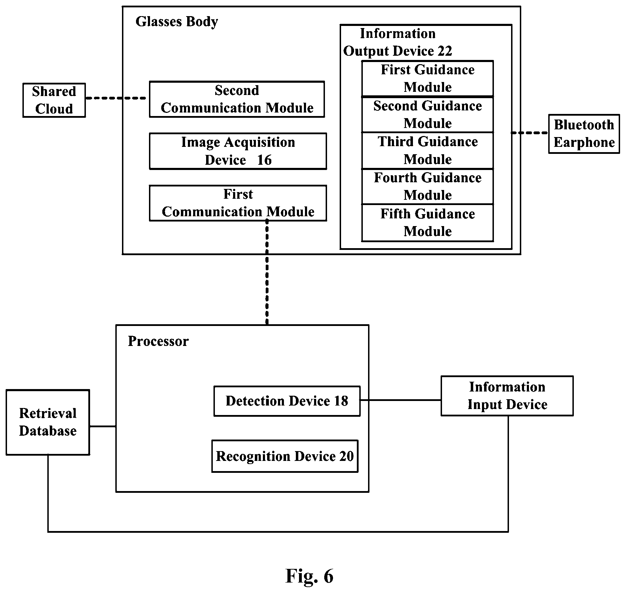

Fig. 1 is a schematic top view of a smart glasses according to one embodiment of the present invention. The smart glasses 10 as shown in Fig. 1 comprises a glasses body constituted by a glasses frame 12 and lenses 14 and an image acquisition device 16, a detection device 18, a recognition device 20 and an information output device 22, wherein the image acquisition device 16 needs to be provided on the glasses body, such as the glasses frame 12 or lenses 14. With reference to the flow chart shown in Fig. 2, the image acquisition device 16 is used for acquiring an environmental image, and the image acquisition device 16, for example, may merely be a camera or a device comprising a camera. The detection device 18, recognition device 20 and information output device 22 are the same as the image acquisition device 16 and are provided on the glasses body. In other embodiments, as shown in Fig. 6, the detection device 18 and the recognition device 20 may not be connected to the glasses body, that is, the detection device 18 and the recognition device 20 are located outside the glasses body. The detection device 18 is in communicative connection with the image acquisition device 16, and the detection device 18 acquires the environmental image, and detects and extracts a human face image or/and foreign language image in the environmental image. The recognition device 20 is in communicative connection with the detection device 18, for recognizing the human face image to acquire identity information corresponding to the human face image. The information output device 22 is in communicative connection with the detection device 18, and the information output device 22 plays the identity information, the mother tongue information and the identity information or/and mother tongue information and at least one of the following to a specified user: the human face image and the foreign language image; and the environmental image. That is, information output by the information output device 22 necessarily comprises the identity information, and may also comprise the human face image and environmental image at the same time; and in translation, the information output by the information output device 22 necessarily comprises mother tongue information, and may also comprise the foreign language image and environmental image at the same time, and a combination method thereof may refer to a combination method of the identity information with the human face image and environmental image below, with only the need to replace the human face image with the foreign language image and replace the identity information with the mother tongue information, which will not be described below. For example, when a stranger or an acquaintance whose name is forgotten is to be recognized only, identity information may merely be provided to a user simply. However, when there are many people to be recognized, the identity information needs to be combined with the human face image and environmental image at this time to help the user not to be confused, which will be described in more detail below.

Basically, according to the present invention, in the case of meeting a person known before but his/her name cannot be remembered, the image acquisition device 16 of the present invention is controlled by a user to actively photograph the surrounding environment so as to acquire an environmental image containing a head portrait of the person, identity information comprising the name about the person is recognized by the detection device 18 and recognition device 20, and the identity information is sent to the user, which increases the convenience of social or business activities. In the case of meeting a stranger, the image acquisition device 16 of the present invention is controlled by a prior user to actively photograph the surrounding environment so as to acquire an environmental image containing a head portrait of the person, and the environmental image is sent to a posterior user. The posterior user passively receives the transmitted environmental image, recognizes, i.e. knows the stranger by the detection device 18 and recognition device 20, and then feeds identity information comprising the name about the person to the prior user, which increases the convenience of social activities. It can be seen that the user may be a user of the smart glasses 10 to which the image acquisition device 16 belongs, or may also be a user of other smart glasses 10. When the user is a user of the smart glasses 10 to which the image acquisition device 16 belongs, the image acquisition device 16 is controlled by the user to actively photograph the surrounding environment so as to acquire an environmental image. When the user is a user of other smart glasses 10, the image acquisition device 16 is controlled by the user of the other smart glasses 10 to passively receive a transmitted environmental image.

As described above, when the number of people to be recognized is smaller, a simple method, e.g. text, may be used to be played to the user, while when the number of people to be recognized is greater, a method of combining voice, image, video and text may be used to prompt the user.

In Fig. 1, the detection device 18 and the recognition device 20 are provided on the glasses body. The smart glasses 10 of the present invention may further be disposed as a structure different from the embodiment shown in Fig. 1. For example, in another embodiment, as shown in Fig. 6, the smart glasses 10 of the present invention comprises a first communication module, and the first communication module is provided on the glasses body and is in communicative connection with the image acquisition device 16. The first communication module is in communicative connection with a processor provided separated from the glasses body, and the main task thereof is to send the environmental image acquired by the image acquisition device 16 to the processor, and the detection device 18 and the recognition device 20 are comprised within the processor. According to the embodiment, the detection device 18 and the recognition device 20 are external, and the main effect thereof is to be able to effectively reduce the weight of the smart glasses 10. In one embodiment, the processor belongs to a mobile phone, that is, the human face image is detected and recognized by the processor of the mobile phone. For a mobile phone with a computing capacity in surplus, this is very beneficial to improving the utilization efficiency of the mobile phone processor.

As to how to recognize a human face, a variety of techniques exist in the prior art. The present invention provides another recognition technique: when the human face image is greater than or equal to a pre-set similarity compared to a first comparison image, then identity information comprised in the first comparison image is extracted, and the identity information is used as the identity information corresponding to the human face image; likewise, when the foreign language image is greater than or equal to a pre-set similarity compared to a second comparison image, then mother tongue information comprised in the second comparison image is extracted, and the mother tongue information is used as the mother tongue information corresponding to the foreign language image. In this way, the objectives of improving a recognition speed and improving a recognition efficiency can be achieved by constantly setting the pre-set similarity.

The first comparison image mentioned above is stored in a retrieval database, and the retrieval database may be chosen to be provided locally or at a cloud end. The first comparison image in the retrieval database is from: a human face image which is fully shared, a human face image which is shared within a particular range and within an acquisition permission, a human face image which is received passively and a human face image which is actively photographed. The human face image which is fully shared may be obtained by any person, while the human face image which is shared within a particular range may only be obtained by a user with an acquisition permission, and the human face image which is received passively is a human face image which is sent by another user as a stranger in the above description. In the case where a permission is needed, comprising a shared cloud, each smart glasses 10 is equivalent to a terminal at this time. The shared cloud is configured to: only a particular user having a permission to obtain or share the human face image, enable the user having the permission to acquire the human face image shared within the particular range and within the acquisition permission. The providing of the shared cloud enables the present user to obtain identity information about a person known by a friend as soon as possible, and also makes it possible to share friends in a circle of friends. Specifically as to the glasses body, the image acquisition device 16 provided on the glasses body further comprises a second communication module in communication with the shared cloud, and the second communication module uses at least one of the following communication protocols: Bluetooth, WIFI, a 3G protocol or 4G protocol. By means of the second communication module, the image acquisition device 16 is able to upload a photograph/image photographed thereby to the shared cloud.

In the case of detecting and recognizing a human face image by means of a processor of a mobile phone mentioned above, a user to which the image acquisition device 16 belongs actively photographs a human face image and manually adds corresponding identity information on the human face image, for example, the identity information may be: name: Li Si, place of work: Chinese Academy of Sciences. One piece of entry information in a mobile phone contact book of the user is generated from the human face image and identity information, and the entry information is used as the first comparison image. At this time, the contact book stored in the mobile phone acts as the retrieval database. Since the entries in a contact book would not exceed several hundreds for common people, the efficiency and accuracy of human face recognition can be significantly improved for recognizing an acquaintance whose name is forgotten.

The smart glasses 10 of the present invention further comprises an information input device provided separated from the glasses body. The information input device is in communicative connection, e.g. Bluetooth, with the detection device 18, and the information input device is able to acquire the human face image, and stores same after the corresponding identity information is added to the retrieval database. For example, the information input device is a camera and keyboard of the mobile phone, the camera being used for photographing the human face, and the keyboard being used for adding the identity information. One piece of the above entry information in the contact book is generated by photographing the human face and adding the information, and is stored in the mobile phone. Providing the information input device separated from the glasses body is able to reduce the worn weight, and improve user experience.

It needs to pay particular attention to the fact that the smart glasses 10 of the present invention may further comprise a Bluetooth earphone provided separated from the glasses body. The Bluetooth earphone is in communicative connection with the information output device 22, and the Bluetooth earphone plays the identity information to the user. The separated Bluetooth earphone is able to be taken off when human face recognition is not required by the user, so that the smart glasses 10 can continue to be worn to use other functions of the smart glasses 10.

After the human face recognition, with regard to how to enable the user to correctly receive recognition information and how to improve the readability of the recognition information, as shown in Fig. 6, the present invention provides the following several technical solutions.

In a first embodiment, the information output device 22 comprises a first guidance module, in communicative connection with the image acquisition device 16 or the detection device 18, for acquiring the environmental image, and marking the corresponding human face image with the identity information on the environmental image, so that the information output device 22 displays the identity information with the environmental image attached to the user. In the embodiment, the environmental image output by the information output device 22 comprises a human face image marked with identity information, enabling an organic combination of the human face image marked with the identity information with the environmental image.

In a second embodiment, the information output device 22 comprises a second guidance module, in communicative connection with the image acquisition device 16, for acquiring the environmental image obtained the last time, and marking the corresponding human face image with the identity information on the environmental image, so that the information output device 22 displays the identity information with the environmental image attached to the user. Likewise, in the embodiment, the environmental image output by the information output device 22 comprises a human face image marked with identity information, and one difference from the first embodiment is that the environmental image is the environmental image obtained the last time.

In the above first embodiment and second embodiment, an arrow is used to mark the corresponding human face image with the identity information on the environmental image. In the case of being able to rapidly recognize a human face, it is appropriate to use the original environmental image to combine with the identity information, otherwise, it is appropriate to use the environmental image obtained the last time to combine with the identity information. These two solutions are both to enable the user to basically correspond to the environmental image when obtaining the identity information. For example, when the recognition time is relatively long, if the original environmental image is still used to combine with the identity information, then the environment where a person to be recognized may already be different at this time, and the environmental image has basically lost a reference significance at this time. However, if the environmental image obtained the last time is to be combined with the identity information, then the user is able to find the recognized person very fast.

In a third embodiment, the information output device 22 comprises a third guidance module, in communicative connection with the recognition device 20 and the detection device 18 respectively, for acquiring relative position information among the recognized human face images, and arranging the acquired identity information corresponding to the human face images according to the relative position information, so that the information output device 22 displays the arranged identity information to the user. In the embodiment, the environmental image is no longer provided, but the identity information is arranged based on relative position information about people to be recognized. It needs to be noted that when a recognized object is only one person, the identity information is directly played to the user. This embodiment is provided in order to adapt to the case of preventing multiple pieces of identity information from confusing the user when objects to be recognized are several people.

In a fourth embodiment, the information output device 22 comprises a fourth guidance module, having a motion sensor, the motion sensor being in communicative connection with the recognition device 20 and the image acquisition device 16 respectively, the motion sensor acquiring displacement information about the environmental image to which the human face image belongs and the environmental image obtained the last time, and playing the identity information with the displacement information attached to the user. The embodiment is particularly appropriate to the case of waiting for a person. When having a first comparison image and waiting for a person, since the motion sensor is able to obtain displacement information, even though a coming person is not within the range of the field of view of the user, the smart glasses 10 of the embodiment is also able to provide approximate position information about the coming person, which is convenient for the user to find the coming person as soon as possible.

In a fifth embodiment, the information output device 22 comprises a fifth guidance module, in communicative connection with the recognition device 20 and the image acquisition device 16 respectively, the fifth guidance module acquiring the environmental image to which the human face image belongs, and highlighting the human face image relative to other portions of the environmental image or fading the other portions of the environmental image relative to the human face image, and displaying the processed environmental image to the user. By fading or highlighting, the readability of recognition information (identity information, identity information + image) can be improved.

Certainly, in other embodiments, at least two of the guidance modules (the first guidance module, the second guidance module, the third guidance module, the fourth guidance module and the fifth guidance module) of the above first embodiment to fifth embodiment may also be combined.

In one embodiment, the environmental image is a portion of region outside the field of view of the user. In this way, the smart glasses 10 may not be overlapped with the field of view of the user. For example, the user may take off the smart glasses 10 to perform human face recognition, while the user himself/herself is not facing the person to be recognized. The embodiment provides convenience when the user needs to perform human face recognition in a particular situation.

In one embodiment, the smart glasses 10 photographs a person, inputs information about the person by means of voice or a name card, processes the information and stores same in a memory of the smart glasses 10. When a human face recognition function is enabled, a camera of the smart glasses 10 is used to scan a person in front, and at this time, a lens-type display device of the smart glasses 10 may display identity information relevant to the person, while the amount of information about the identity information may be determined by settings. At the same time, an earphone of the smart glasses 10 may set a broadcast language prompt, improving the acquisition speed and accuracy of the identity information.

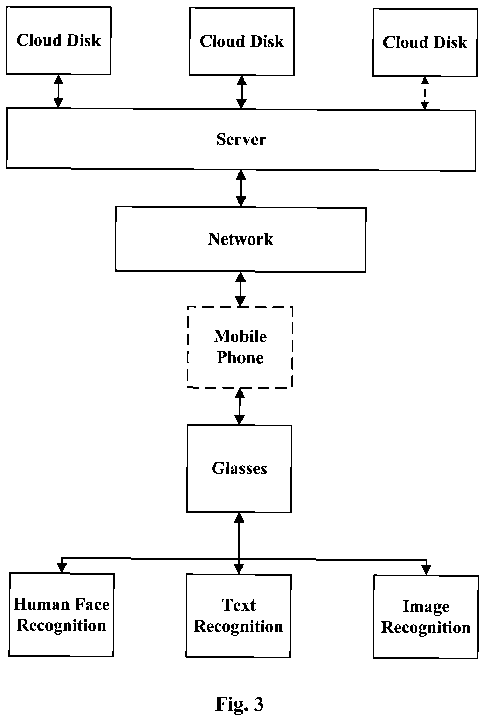

Fig. 3 is a system flow chart of a smart glasses 10 of the present invention. Each user in Fig. 3 has a cloud disk. A server is equivalent to the shared cloud described above. The server collects photographs shared by the cloud disks to serve as a first comparison image. The server is in communicative connection with a mobile phone comprising a detection device 18 and a recognition device 20. The glasses in Fig. 3 is a portion other than the detection device 18 and the recognition device 20. The glasses in Fig. 3 is used for human face recognition, text recognition (translation) and image recognition (for example, the difference between an image and an image used for comparison).

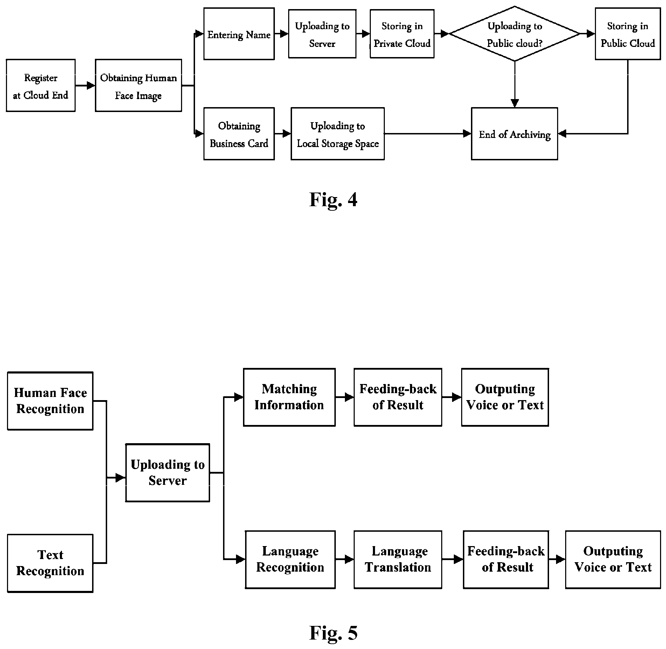

Fig. 4 is a flow chart of a smart glasses 10 generating a first comparison image for human face recognition of one embodiment of the present invention. The smart glasses 10 may implement human face recognition by means of big data or dedicated private cloud data. As shown in Fig. 4, the procedure is as follows: A client of the smart glasses 10 registers an account at a cloud end and obtains a dedicated private cloud space, and obtains a human face image and identity information and transmits same to a server at the cloud end independently or by means of Bluetooth, WIFI or with the aid of a mobile phone network. After processing and authentication, the server stores the data in a cloud disk of a user. When the user needs to perform human face recognition, relevant data is invoked from the cloud end via a wireless network to match a human face with information. Group big data may be established, for example, one corporation or circle of friends shares one common cloud space, and private cloud spaces of all individual smart glasses 10 may selectively store relevant data in the public cloud space. In this way, a circle of acquaintances of each person may be shared with friends of colleagues, expanding the social range of colleagues and friends.

Fig. 5 is a flow chart of a smart glasses 10 for human face recognition and text recognition of one embodiment of the present invention. A language library is provided in a server of a cloud end or a self-owned storage space of the smart glasses 10, which contains intertranslation information between languages of several countries with Chinese. A user of the smart glasses 10 may use a camera to scan relevant text contents in a foreign language image, or use a voice receiving device to receive external voice broadcast, and matches with information stored in the language library after processing by a processing chip to implement intertranslation between a foreign language with Chinese. After an intertranslation result is fed back, relevant information may be presented to the user by means of screen text display or earphone voice broadcast.

Various component embodiments of the present invention may be implemented by hardware, or implemented by software modules running on one or more processors, or implemented by a combination thereof. It should be understood by those skilled in the art that a microprocessor or a digital signal processor (DSP) may be used in practice to implement some or all functions of some or all components or modules in the device according to the embodiments of the present invention. The present invention may also be implemented as a device or means program (e.g. a computer program and a computer program product) for executing a part or all of the method described herein. Such program which implements the present invention may be stored in a computer-readable medium, or may have the form of one or more signals. Such signal(s) may be downloaded from Internet web sites, or provided on a carrier signal, or provided in any other forms.

So far, it should be appreciated by those skilled in the art that although the present disclosure has shown and described a plurality of exemplary embodiments of the present invention in detail, may other variations or modifications conforming to the principle of the present invention may still be directly determined or derived from the disclosure of the present invention without departing from the spirit and range of the present invention. Therefore, the range of the present invention should be understood and deemed as covering all these other variations or modifications.

## Claims

1. A smart glasses, comprising:
a glasses body having a glasses frame and lenses;
an image acquisition device, provided on the glasses body, for acquiring an environmental image;
a detection device, in communicative connection with the image acquisition device, the detection device acquiring the environmental image, and detecting and extracting a human face image or/and foreign language image in the environmental image;
a recognition device, in communicative connection with the detection device, for recognizing the human face image or/and foreign language image to acquire identity information corresponding to the human face image and mother tongue information corresponding to the foreign language image; and
an information output device, provided on the glasses body and in communicative connection with the detection device, the information output device playing the identity information, the mother tongue information, the identity information or/and mother tongue information, and at least one of the following images to a specified user: the human face image, the foreign language image, and the environmental image.

2. The smart glasses according to claim 1, wherein the identity information and the mother tongue information is played to the user by at least one of the following manners: voice, image, video, and text.

3. The smart glasses according to claim 1 or 2, further comprising:
a first communication module, provided on the glasses body and in communicative connection with the image acquisition device, the first communication module being in communicative connection with a processor provided separated from the glasses body and sending the environmental image acquired by the image acquisition device to the processor, and the detection device and the recognition device being comprised within the processor.

4. The smart glasses according to claim 3, wherein
the processor belongs to a mobile phone.

5. The smart glasses according to claim 1 or 2, wherein
the detection device and the recognition device are provided on the glasses body.

6. The smart glasses according to one of claims 1-5, wherein
the recognition device is configured to, when the human face image is greater than or equal to a pre-set similarity compared to a first comparison image, then extract identity information comprised in the first comparison image, and use the identity information as the identity information corresponding to the human face image; and when the foreign language image is greater than or equal to a pre-set similarity compared to a second comparison image, then extract mother tongue information comprised in the second comparison image, and use the mother tongue information as the mother tongue information corresponding to the foreign language image.

7. The smart glasses according to one of claims 1-6, further comprising:
a retrieval database, located locally or at a cloud end, the retrieval database storing the first comparison image for comparing with the human face image and the second comparison image for comparing with the foreign language image.

8. The smart glasses according to claim 7, wherein
the retrieval database receives at least one of the following human face images as the first comparison image:
the human face image which is fully shared;
the human face image which is shared within a particular range and within an acquisition permission;
the human face image which is received passively; and
the human face image which is actively photographed.

9. The smart glasses according to claim 8, further comprising:
a shared cloud, the shared cloud being configured to: only a particular user having a permission to obtain or share the human face image, enable the user having the permission to acquire the human face image shared within the particular range and within the acquisition permission.

10. The smart glasses according to claim 9, wherein the image acquisition device further comprises a second communication module in communication with the shared cloud, and the second communication module uses at least one of the following communication protocols:
Bluetooth,
WIFI, and
3G protocol or 4G protocol.

11. The smart glasses according to claim 8, wherein
a user of the image acquisition device actively photographs the human face image and manually adds the corresponding identity information on the human face image to generate one piece of entry information in a mobile phone contact book of the user, and uses the entry information as the first comparison image.

12. The smart glasses according to one of claims 1-11, wherein the smart glasses further comprise:
an information input device, provided separated from the glasses body and in communicative connection with the detection device, the information input device being able to acquire the human face image, and storing same after the corresponding identity information is added to the retrieval database.

13. The smart glasses according to one of claims 1-12, wherein the smart glasses further comprise:
a Bluetooth earphone, provided separated from the glasses body and in communicative connection with the information output device, the Bluetooth earphone playing the identity information to the user.

14. The smart glasses according to one of claims 1-13, wherein the information output device further comprises:
a first guidance module, in communicative connection with the image acquisition device or the detection device, for acquiring the environmental image, and marking the corresponding human face image with the identity information on the environmental image, so that the information output device displays the identity information with the environmental image attached to the user.

15. The smart glasses according to one of claims 1-13, wherein the information output device further comprises:
a second guidance module, in communicative connection with the image acquisition device, for acquiring the environmental image obtained the last time, and marking the corresponding human face image with the identity information on the environmental image, so that the information output device displays the identity information with the environmental image attached to the user.

16. The smart glasses according to claim 14 or 15, wherein
the first or second guidance module uses an arrow to mark the corresponding human face image with the identity information on the environmental image.

17. The smart glasses according to one of claims 1-13, wherein the information output device further comprises:
a third guidance module, in communicative connection with the recognition device and the detection device respectively, for acquiring relative position information among the recognized human face images, and arranging the acquired identity information corresponding to the human face images according to the relative position information, so that the information output device displays the arranged identity information to the user.

18. The smart glasses according to one of claims 1-13, wherein the information output device further comprises:
a fourth guidance module, having a motion sensor, the motion sensor being in communicative connection with the recognition device and the image acquisition device respectively, the motion sensor acquiring displacement information about the environmental image to which the human face image belongs and the environmental image obtained the last time, and playing the identity information with the displacement information attached to the user.

19. The smart glasses according to one of claims 1-13, wherein the information output device further comprises:
a fifth guidance module, in communicative connection with the recognition device and the image acquisition device respectively, the fifth guidance module acquiring the environmental image to which the human face image belongs, and highlighting the human face image relative to other portions of the environmental image or fading the other portions of the environmental image relative to the human face image, and displaying the processed environmental image to the user.

20. The smart glasses according to one of claims 1-19, wherein
the environmental image is a portion of region outside the field of view of the user.

21. The smart glasses according to one of claims 1-20, wherein
the image acquisition device comprises a camera.

22. The smart glasses according to one of claims 1-21, wherein
the user is a user of a smart glasses to which the image acquisition device belongs or a user of other smart glasses.

23. The smart glasses according to one of claims 1-22, wherein
the image acquisition device is controlled by the user to actively photograph the surrounding environment so as to acquire an environmental image.

24. The smart glasses according to one of claims 1-22, wherein
the image acquisition device is controlled by the user to passively receive a transmitted environmental image.
